# EUROPÄISCHE PATENTSCHRIFT

(11) **EP 0 904 507 B1**
(45) Veröffentlichungstag und Bekanntmachung des Hinweises auf die Patenterteilung: **14.05.2003**
(21) Anmeldenummer: 98913685.8
(22) Anmeldetag: 07.03.1998
(51) Int. Cl.: F16L 3/04

(54) **HALTER FÜR LEITUNGEN**
SUPPORT FOR CONDUIT
SUPPORT POUR CONDUITES

(30) Priorität: 14.03.1997 DE 19710658
(43) Veröffentlichungstag der Anmeldung: 31.03.1999
(73) Patentinhaber: DaimlerChrysler Rail Systems GmbH, 13627 Berlin (DE)
(72) Erfinder: WEBER, Oliver, D-90613 Gro habersdorf (DE); BREHM, Reiner, D-90411 Nürnberg (DE)
(74) Vertreter: Thielmann, Andreas
(86) Internationale Anmeldenummer: EP9801343
(87) Internationale Veröffentlichungsnummer: WO98041788

(56) Entgegenhaltungen:
- CH-A- 291 292
- GB-A- 2 059 493

## Beschreibung

Die Erfindung betrifft einen Halter für wenigstens eine Leitung, wie Rohrleitung, elektrische Leitung oder Kabel.

Es ist bei Haltern für Rohr- oder elektrische Leitungen ganz allgemein bekannt, Halteschellen mit einer oder mehreren, die betreffende Leitung oder mehrere parallel zueinander verlaufende Leitungen über- oder umgreifenden Ausnehmungen zu versehen.

Derartige Halteschellen werden mittels Spannmitteln wie Schrauben, Nieten oder dergleichen an einem Tragelement festgesetzt, nachdem die zugehörige Leitung in die betreffende Ausnehmung eingefügt worden ist. Von Nachteil ist bei diesem Aufbau, daß der Halter eine feste Zahl von Befestigungsmöglichkeiten für Leitungen vorgibt und auch deren räumliche Zuordnung zueinander vorbestimmt.

Aus der CH 291 292 A ist ein Halter für Leitungen oder dergleichen bekannt, bei dem die hakenförmig ausgebildeten Enden einer einstückigen, U-förmigen Halteschelle in eine Halteschiene mit C-förmigem Querschnitt eingehängt werden können. Im Bogenbereich der U-förmigen Halteschelle ist eine über eine Verschraubung verstellbare Druckwanne angeordnet, über welche die zu befestigende Leitung gegen die Halteschiene verspannt werden kann, wodurch auch eine Fixierungen der Halteschelle an der Halteschiene erzielt wird.

Der Erfindung liegt die Aufgabe zugrunde, bei einem Halter Maßnahmen zu treffen, durch welche Halteschellen wahlweise in unterschiedlicher Größe und/oder gegenseitiger Zuordnung angewandt werden können.

Die Lösung dieser Aufgabe erfolgt gemäß der Erfindung durch die Merkmale des ersten Anspruchs.

Bei einer Ausgestaltung eines Halters gemäß der Erfindung wird durch die Anwendung einer langgestreckten Halteschiene und darauf paarweise einander zugeordneter sowie verschiebbar gelagerter Halteschellen die Möglichkeit eröffnet, unterschiedliche Leitungen in beliebiger Reihenfolge über die freie Breite der Halteschiene festlegen zu können. Die Halteschellen können somit in flexibler Anordnung entsprechend der Ordnung von zulaufenden Leitungen auf die Halteschiene in angepaßter Größe paarweise aufgeschoben werden. Da die Halteschellen-Paare zudem getrennt sind, können die Leitungen auch bei an einem Tragelement, insbesondere an einer Wandung eines Schienenfahrzeugs bereits vormontierten Halter nachträglich radial zwischen die aufklappbar an der Halteschiene sitzenden Schellenpaare eingelegt werden.Die zusammengehörigen Schellenpaare werden dann unter Zuhilfenahme von Spannmitteln, insbesondere Schrauben-/ Mutterverbindungen an ihren freien Enden zusammengespannt. Wenn dabei der Durchmesser oder ein denselben umschließender Umkreis gleich oder größer als der Kreis ist, der in die Fläche eingeschrieben werden kann, welche zwischen zwei zusammengehörigen Halteschellen und der Halteschiene eingeschlossen ist, dann wird die Leitung zwischen den zugehörigen Halteschellen und dem betreffenden Abschnitt der Halteschiene zumindest reibschlüssig festgesetzt, wobei dann auch eine Kraftkomponente entsteht, welche die die Halteschiene hintergreifenden Kanten der Ausschnitte an die Rückseite der Halteschienen andrückt und damit die Halteschellen gegen Verschieben auf der Halteschiene sichert. Die Halteschiene weist vorzugsweise an ihren Enden einen Durchbruch auf, der außerhalb des von Halteschellen übergriffenen Längenbereichs liegt, um sie sicher an einem Tragelement festsetzen zu können und ein seitliches Abgleiten von Halteschellen vermieden ist. Die Halteschiene weist vorzugsweise einen rechteckigen Querschnitt auf, dem der entsprechende Ausschnitt in den U-Schenkeln der Halteschellen angepaßt ist. Dabei sind allerdings die Ausschnitte etwas größer als die Halteschienenabmessungen ausgebildet, um die leichte Verschiebbarkeit auf der Halteschiene zu gewährleisten. Gleichzeitig sind die Halteschellen dadurch auch in begrenztem Maße gegenüber der Halteschiene kippbar, so daß zum radialen Einlegen von Leitungen zwischen zwei zusammengehörige, spiegelbildlich gebogene, mit ihren konkaven Seiten einander zugewandten Halteschellen, die sich zu einer U-Form ergänzen,diese Halteschellen nicht so weit auf der Halteschiene verschoben werden müssen, wie es der Durchmesser der jeweiligen Leitung erfordert. Die freien Enden der Halteschellen können senkrecht zur Längsachse der Halteschiene bzw. parallel zu der die Ausschnitte in den U-Schenkeln aufnehmenden Ebene stehen und von der Halteschiene weggerichtet sein, so daß daran ein Spannmittel angreifen kann, das diese Endabschnitte und damit die Halteschellen selbst aufeinander zu zieht und die für das Einspannen der eingelegten Leitung erforderliche Kraft erzeugt. Hierzu können diese Endabschnitte parallel zur Halteschiene bzw. zur Achse der Ausschnitte verlaufende Bohrungen für eine Schraube mit Schraubmutter, für einen Niet oder dergleichen Spannmittel aufweisen. Die freie Länge der Halteschiene kann dabei größer sein, als es die Anzahl der Halteschellen-Paare erfordert, so daß die Halteschellenposition der Lage des jeweils zulaufenden Kabels oder Rohres angepaßt werden kann. Ein Schienenfahrzeug,in dem ein in dieser Weise ausgebildeter Halter zur Anwendung gelangen kann, kann an einem Wandungselement eine C-Profilschiene tragen, in welcher ein hammerförmiger Spannanker in Längsrichtung der C-Profilschiene verschiebbar angeordnet ist und der als Führungs- und Befestigungselement die Halteschiene in reibschlüssiger Anlage mit der C-Profilschiene hält.

Die Erfindung ist nachfolgend anhand der Skizzen eines Ausführungsbeispiels näher erläutert.

Es zeigen:
- Figur 1:: einen Halter mit eingespannter Leitung an einem Wandungseiement und
- Figur 2:: eine Seitentschnittdarstellung der Anordnung nach Figur 1 entlang der Linie A-A.

Ein als Strangpreßprofil ausgebildetes Wandungselement 1 eines nicht näher dargestellten Schienenfahrzeugs ist mit einer C-Profilschiene 2 ausgestattet, die sich zumindest über einen Teil der Länge des Wandungselements 1 erstreckt. In die C-Profilschiene 2 greift der Kopf 3 eines im Querschnitt hammerförmig ausgebildeten Spannankers 4 ein, der vorliegend als Kopfschraube mit Schraubmutter 5 ausgebildet ist. Der Spannanker 4 durchgreift einen Durchbruch 6 in einer quer zur Längsrichtung der C-Profilschiene liegenden Halteschiene 7. Der Durchbruch 6 befindet sich dabei an einem planen Ende der Halteschiene 7, jedenfalls aber außerhalb des Längenbereichs der Halteschiene 7, auf dem Paare von zusammengehörenden Halteschellen 8, 9 anzuordnen sind. Je zwei Halteschellen 8, 9 sind für die Festlegung einer Leitung 10 vorgesehen, die ein Rohr oder ein Kabel oder dergleichen sein kann. Die Halteschellen 8, 9 sind spiegelbildlich gebogen und weisen mit ihren konkaven Seiten aufeinander zu, so daß zwischen diesen Halteschellen 8, 9 und dem zugehörigen Abschnitt der Halteschiene 7 eine Fläche freibleibt, die den Querschnitt der Leitung 10 aufnehmen kann.

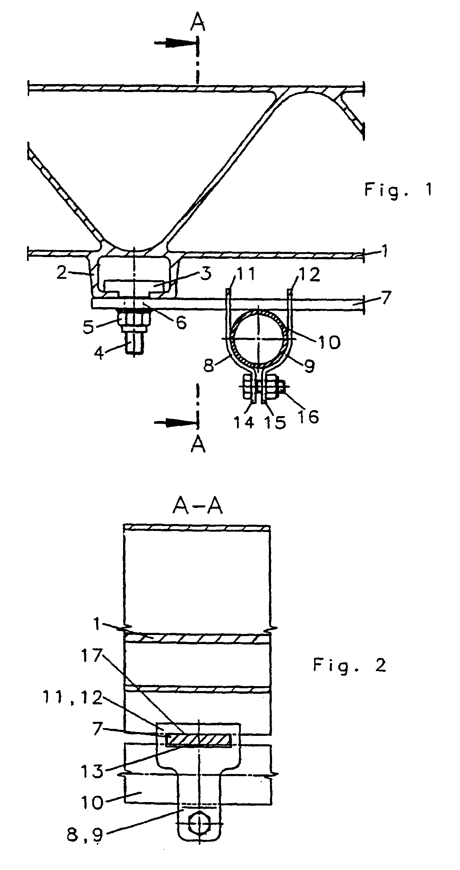

Im zusammengesetzten Zustand bilden die Halteschellen 8, 9 eine U-Form mit parallel zueinander verlaufenden Endbereichen 11, 12, welche die freien U-Schenkel der U-Form bilden. Die Endbereiche 11, 12 stehen quer zur Längsachse der Halteschiene 7 und auch quer zur Längsachse der U-Form bzw. der eingelegten Leitung 10 und weisen jeweils einen Ausschnitt 13 auf, durch den die gemeinsame Halteschiene 7 hindurchgreift. Der vorzugsweise geschlossene Ausschnitt 13 ist so bemessen, daß die Halteschellen 8, 9 unbehindert auf der Halteschiene 7 verschoben und gegebenenfalls in beschränktem Maße aufgrund des radialen Spiels gekippt werden können. Die der Halteschiene 7 abgewandten Endabschnitte 14 bzw. 15 der Halteschellen 8, 9 sind mittels eines Spannmittels 16 in Funktionsstellung gemäß Figur 1 zusammengehalten.

Auf die Halteschiene 7 können entsprechend ihrer freien Länge mehrere Paare von entsprechend dem Durchmesser von Leitungen 10 bemessene Halteschellen 8, 9 aufgeschoben werden. Die Beabstandung von Halteschellen-Paaren ist dabei frei wählbar und kann entsprechend der örtlichen Lage zulaufender Leitungen 10 variiert werden. Die Halteschellen 8, 9 sind dabei so bemessen bzw. gestaltet, daß sie im zusammengespannten Zustand gemäß Figur 1 mit ihren aufeinander zulaufenden Abschnitten am Umfang der jeweiligen Leitung 10 anliegen und dabei diese Leitung 10 noch an die Halteschiene 7 andrücken. Dadurch wird die Leitung 10 gegen Axialverschiebung gesichert und zugleich erreicht, daß die die Halteschiene hintergreifenden Ausschnittkanten 17 in reibschlüssige Anlage mit der Halteschiene 7 treten. Dadurch ist auch eine Verschiebung der Halteschellen-Paare längs der Halteschiene 7 unterbunden. Die zwischen zwei zusammengehörigen Halteschellen 8, 9 und der Halteschiene 7 eingeschlossene Fläche nimmt somit einen eingeschriebenen Kreis auf, der bei verspannten Halteschellen 8, 9 höchstens gleich oder etwas kleiner ist als der Querschnitt einer zwischen die Halteschellen 8,9 eingefügten Leitung 10.

Die planen Abschnitte der U-Schenkel 11, 12 reichen bis etwa an die senkrecht dazu verlaufende Querschnittmittellinie der jeweils zugehörigen Leitung 10, während die anschließenden Bogenabschnitte dem Durchmesser der Leitung 10 entsprechend aufeinander zulaufen. Die sich dort anschließenden, der Halteschiene 7 abgewandten Endabschnitte 14, 15 verlaufen parallel zu der die Ausschnitte 13 aufnehmenden Ebene und sind von der Halteschiene 7 weggerichtet, so daß der zwischen den Halteschellen 8, 9 eingeschlossene Raum frei für die Leitung 10 bleibt. Die zu Spannzwecken üblicherweise mit Abstand voneinandr stehenden Endabschnitte 14, 15 sind parallel zur Halteschiene 7 bzw. zur Achse der Ausschnitte 13 durchbohrt, wobei durch die dadurch geschaffenen Bohrungen das aus Schraube und Schraubmutter, Niet oder dergleichen gebildete Spannmittel hindurchgreift. Mit diesem Spannmittel 16 werden die Endabschnitte 14, 15 soweit einander genähert, bis eine ausreichende Druckkraft auf die Leitung 10 ausgeübt wird, die eine selbsttätige Verschiebung in radialer wie in Achsrichtung unterbindet.

Ein in dieser Weise aufgebauter Halter bietet eine hohe Flexibilität hinsichtlich der Befestigung unterschiedlicher Leitungen 10 an wahlfreien Stellen entlang der Halteschiene 7. Er ist zudem in einfacher Weise zu montieren und bewirkt bei Festlegung beider Enden der Halteschiene eine hohe Festigkeit sowie Verliersicherheit bei kostengünstigem Aufbau und geringem Gewicht. Dabei können unterschiedlich starke Leitungen in beliebiger Reihenfolge an der Halteschiene festgesetzt werden. Zudem ist ein derartiger Halter besonders geeignet für die Anwendung in einem Schienenfahrzeug mit Wandungselementen aus Strangpreßprofil, an dem zugleich eine insbesondere C-förmige Profilschiene vorgesehen sein kann, an welcher der Halter seinerseits in beliebiger Position entlang der Profilschiene reibschlüssig festgesetzt werden kann.

## Patentansprüche

1. Halter für wenigstens eine Leitung, wie Rohrleitung, elektrische Leitung oder Kabel, mit die Leitung zumindest teilweise umschließenden Halteschellen und wenigstens einem die Halteschellen zusammenspannenden Spannmittel, insbesondere für die Halterung von Leitungen an Wandungen von Schienenfahrzeugen, wobei eine gemeinsame Halteschiene (7) vorgesehen ist sowie zwei Halteschellen (8,9) für je eine Leitung (10) vorgesehen sind, die spiegelbildlich gebogen mit ihren konkaven Seiten einander zugewandt sind und zusammengesetzt eine U-Form bilden, und die Endbereiche (11, 12) von U-Schenkeln der Halteschellen (8,9) quer zur U-Längsachse mit wenigstens einem Ausschnitt (13) versehen sind, durch die die Halteschiene (7) mit radialem Spiel greift und die der Halteschiene (7) abgewandten Endabschnitte der Halteschellen (8,9) mittels der Spannmittel (16) zusammengehalten sind.

2. Halter nach Anspruch 1, **dadurch gekennzeichnet, daß** mehrere Paare von Halteschellen (8,9) auf der Halteschiene (7) in deren Längsrichtung nebeneinander sitzen.

3. Halter nach Anspruch 1 oder 2, **dadurch gekennzeichnet, daß** die Halteschiene (7) zumindest einen Durchbruch (6) außerhalb des von Halteschellen (8,9) übergriffenen Längenbereichs aufweist.

4. Halter nach einem der Ansprüche 1 bis 3, **dadurch gekennzeichnet, daß** die Halteschiene (7) einen rechteckigen Querschnitt aufweist und daß der Ausschnitt (13) in den U-Schenkeln (11, 12) der Halteschellen (8,9) dieser Querschnittsform angepaßt ist.

5. Halter nach einem der Ansprüche 1 bis 4, **dadurch gekennzeichnet, daß** die der Halteschiene (7) abgewandten Endabschnitte (14 ,15) der Halteschellen (8,9) parallel zu der die Ausschnitte (13) aufnehmenden Ebene und von der Halteschiene (7) weggerichtet sind.

6. Halter nach einem der Ansprüche 1 bis 5, **dadurch gekennzeichnet, daß** die Endabschnitte (14 ,15) parallel zur Halteschelle (7) bzw. zur Achse der Ausschnitte (13) verlaufende Bohrungen für ein als Schraube mit Schraubmutter oder Niet ausgebildetes Spannmittel (16) aufweisen.

7. Halter nach einem der Ansprüche 1 bis 6, **dadurch gekennzeichnet, daß** ein in die zwischen zwei zusammengehörigen Halteschellen (8,9) und der Halteschiene (7) eingeschlossene Fläche eingeschriebener Kreis bei verspannten Halteschellen (8,9) kleiner oder gleich dem Querschnitt einer zwischen diese Halteschellen (8,9) eingefügten Leitung (10) ist.

8. Halter nach einem der Ansprüche 1 bis 7, **dadurch gekennzeichnet, daß** die Halteschiene (7) eine mehrfache Länge des Abstandes von zwei U-Schenkeln (11, 12) zusammengehöriger Halteschellen (8,9) aufweist.

9. Verwendung eines Halters gemäß einem der Ansprüche 1 bis 8 an einem Schienenfahrzeug mit einer Wandung (1) , an der eine C-Profilschiene (2) vorgesehen ist , in welcher ein im Querschnitt hammerförmiger, in Längsrichtung der C-Profilschiene (2) verschiebbarer Spannanker (4) angeordnet ist, der die Halteschiene (7) in reibschlüssiger Anlage mit der C-Profilschiene (2) hält.

## Claims

1. A holder for at least one line such as a pipeline, electrical power line or cable, with holding clamps at least partly surrounding the line and at least one tensioning means to clamp the holding clamps together, particularly for the supporting of lines on the walls of railway vehicles, wherein one common holding rail (7) is provided as well as two holding clamps (8, 9) per line (10) being of mirror-symmetrical curvature, their concave sides facing one another and which together form a U-shape, and the terminal areas (11, 12) of U-legs of said holding clamps (8, 9) have at least one slot (13) arranged transversely to a longitudinal axis of the U-shape through which holding rail (7) extends with radial clearance, and the terminal segments of said holding clamps (8, 9) facing away from said holding rail (7) are held together by means of said tensioning means (16).

2. The holder according to claim 1, **characterized in that** a plurality of holding clamp pairs (8, 9) are positioned on said holding rail (7) adjacent one another in the longitudinal direction of said rail.

3. The holder according to claim 1 or claim 2, **characterized in that** said holding rail (7) has at least one opening (6) outside the longitudinal area engaged with said holding clamps (8, 9).

4. The holder in accordance with any one of claims 1 to 3, **characterized in that** holding rail (7) has a rectangular cross section and **in that** said slot (13) in the U-legs (11, 12) of said holding clamps (8, 9) matches this cross-sectional shape.

5. The holder in accordance with any one of claims 1 to 4, **characterized in that** the terminal segments (14, 15) of holding clamps (8, 9) facing away from said holding rail (7) are aligned parallel to a plane receiving said slot (13) and are facing away from said holding rail (7).

6. The holder in accordance with any one of claims 1 to 5, **characterized in that** terminal segments (14, 15) are disposed with borings that run parallel to the holding rail (7) or to an axis of the slot (13) for receiving tensioning means (16) configured as a bolt with nut or as a rivet.

7. The holder in accordance with any one of claims 1 to 6, **characterized in that** when holding clamps (8, 9) are clamped together, a circle inscribed within the area between a corresponding pair of holding clamps (8, 9) and holding rail (7) is smaller than or equal to a cross section of a line (10) introduced between said holding clamps (8, 9).

8. The holder in accordance with any one of claims 1 to 7, **characterized in that** holding rail (7) has a length which is a multiple of the distance between the two U-legs (11, 12) of a corresponding pair of holding clamps (8, 9).

9. The use of a holder in accordance with any one of claims 1 to 8 on a railway vehicle having a wall (1) provided with a C-shaped profile rail (2) on which a displaceable fastening anchor (4) having a hammer-shaped cross section is arranged in a longitudinal direction of said C-shaped profile rail (2) which holds holding rail (7) in frictional contact with said C-shaped profile rail (2).

## Revendications

1. Support pour au moins une conduite, telle qu'une tuyauterie, une ligne électrique, un câble, qui comprend des colliers de support entourant au moins partiellement la conduite et au moins un moyen de serrage serrant ensemble les colliers de support, en particulier pour le maintien de conduites contre des parois de véhicules ferroviaires, une coulisse commune (7) ainsi que deux colliers de support (8, 9) pour chaque conduite (10) étant prévus, lesquels étant prévus incurvés symétriquement tournés l'un vers l'autre par leurs faces concaves et formant ensemble une forme en U et les zones d'extrémité (11, 12) de branches en U des colliers de support (8, 9) étant munies transversalement à l'axe longitudinal du U avec au moins une découpe (13), par laquelle s'engage la coulisse de support (7) avec un jeu radiale, et les sections d'extrémité des colliers (8, 9), détournées des coulisses de support (7) étant maintenues par des moyens de serrage (16).

2. Support selon la revendication 1, **caractérisé en ce que** plusieurs paires de colliers de support (8, 9) reposent les uns à côté des autres sur la coulisse de support (7) dans le sens longitudinal.

3. Support selon la revendication 1 ou 2, **caractérisé en ce que** la coulisse de support (7) présente au moins une percée (6) à l'extérieur de la zone longitudinale engagée avec des colliers de support (8, 9).

4. Support selon l'une des revendications 1 à 3, **caractérisé en ce que** la coulisse de support (7) présente une section transversale rectangulaire et **en ce que** la découpe (13) dans les branches de U (11, 12) des colliers de support (8, 9) est adaptée à cette forme de section transversale.

5. Support selon l'une des revendications 1 à 4, **caractérisé en ce que** les sections d'extrémité (14, 15) des colliers de support (8, 9), détournées de la coulisse de support (7), sont parallèles au plan logeant les découpes (13) et sont dirigées dans la direction opposée à la coulisse de support (7).

6. Support selon l'une des revendications 1 à 5, **caractérisé en ce que** les sections d'extrémité (14, 15) présentent des perçages s'étendant parallèlement au collier de support (7) respectivement à l'axe des découpes (13) pour un moyen de serrage (16) conçu comme une vis avec écrou ou un rivet.

7. Support selon l'une des revendications 1 à 6, **caractérisé en ce qu'**en position de serrage des colliers de support (8, 9), un cercle inscrit dans la surface prise entre deux colliers de support (8, 9) associés et la coulisse de support (7) est inférieur ou égal à la section transversale d'une conduite (10) introduite entre ces colliers de support (8, 9).

8. Support selon l'une des revendications 1 à 7, **caractérisé en ce que** la coulisse de support (7) présente une longueur multiple de la distance entre deux branches de U (11, 12) des colliers de support (8, 9) associés.

9. Utilisation d'un support selon l'une des revendications 1 à 8, sur un véhicule ferroviaire avec une paroi (1) sur laquelle est prévue une coulisse (2) profilée en C, dans laquelle est disposée une ancre de serrage (4) coulissant dans le sens longitudinal de la coulisse (2) profilée en C et de section transversale en forme de marteau, ancre qui maintient la coulisse de support (7) en application par friction avec la coulisse (2) profilée en C.
